Europäisches Patentamt

European Patent Office

Office européen des brevets

(19)

(11) **EP 1 209 819 A1**

(12) # DEMANDE DE BREVET EUROPEEN

(43) Date de publication:
**29.05.2002 Bulletin 2002/22**

(51) Int Cl.⁷: **H04B 3/14**, H04L 25/02, H04L 25/03

(21) Numéro de dépôt: **01204428.5**

(22) Date de dépôt: **20.11.2001**

(84) Etats contractants désignés:
**AT BE CH CY DE DK ES FI FR GB GR IE IT LI LU MC NL PT SE TR**
Etats d'extension désignés:
**AL LT LV MK RO SI**

(30) Priorité: **28.11.2000 FR 0015353**

(71) Demandeur: **Koninklijke Philips Electronics N.V.**
**5621 BA Eindhoven (NL)**

(72) Inventeurs:
 • **Bachelay, Alain**
 **75008 Paris (FR)**
 • **Rouet, Pascal**
 **75008 Paris (FR)**
 • **Magnin, Vincent**
 **75008 Paris (FR)**

(74) Mandataire: **de la Fouchardière, Marie-Noelle et al**
 **Société Civile "SPID"**
 **156, Boulevard Haussmann**
 **75008 Paris (FR)**

(54) **Dispositif d'égalisation pour réseaux de distribution par cable**

(57) Linvention concerne un dispositif d'égalisation (62) utilisé pour faire évoluer un réseau de distribution VHF en un réseau très large bande.

Le dispositif d'égalisation selon l'invention est conçu pour découper la bande de fréquence utile entre une partie basse (VHF) et une partie haute (UHF). Une première branche traite la partie basse. Une seconde branche traite la partie haute. Les branches sont chacune munie d'un atténuateur (V1, V2), l'atténuation apportée par le premier atténuateur (V1) étant supérieure à celle apportée par le second atténuateur (V2). Les dispositifs de séparation et de recombinaison qui réunissent les deux branches en entrée et en sortie ont une bande passante déterminée de façon à ce que le signal de sortie ($s_{OUT}$) soit d'amplitude sensiblement constante sur lesdites première et seconde bandes de fréquences.

Application : CATV, SMATV

FIG. 3

EP 1 209 819 A1

## Description

Domaine de l'invention

L'invention concerne un dispositif d'égalisation comportant une première et une seconde branches réunies en entrée par un dispositif de séparation de signal destiné à séparer en fréquence un signal d'entrée pour délivrer un signal occupant une première bande de fréquence sur la première branche et un signal occupant une seconde bande de fréquence sur la seconde branche, et en sortie par un dispositif de recombinaison destiné à délivrer un signal de sortie occupant les première et seconde bandes de fréquences à partir des signaux transmis sur les première et seconde branches.

L'invention concerne aussi un réseau câblé de distribution de signaux qui comporte une tête de réseau et au moins un câble le long duquel est inséré au moins un dispositif de traitement de signaux. L'invention concerne également ledit dispositif de traitement de signaux.

L'invention s'applique notamment aux réseaux très large bande (40Mhz- 860Mhz) de distribution câblée de signaux de télévision.

Arrière plan technologique de l'invention

Le brevet américain n°4,250,459 décrit un dispositif d'égalisation comportant un première branche constituée d'un dispositif de filtrage passe-haut en série avec un atténuateur variable, et une seconde branche constituée d'une résistance. Les deux branches sont combinées en sortie par un additionneur.

Un tel dispositif est utilisé dans un réseau de distribution par câble pour corriger l'atténuation introduite par le câble sur les signaux transmis, en particulier sur les hautes fréquences.

L'invention propose une autre variante d'un tel dispositif d'égalisation, utilisable pour une autre application.

Résumé de l'invention

Un dispositif d'égalisation selon l'invention et tel que décrit dans le paragraphe introductif est caractérisé en ce que la première et la deuxième bandes de fréquences correspondent à un découpage d'une bande de fréquence utile entre une partie basse et une partie haute, les première et seconde branches étant chacune munie d'au moins un atténuateur, l'atténuation apportée par le premier atténuateur étant supérieure à celle apportée par le second atténuateur, et les dispositifs de séparation et de recombinaison ayant une bande passante déterminée de façon à ce que le signal de sortie soit d'amplitude sensiblement constante sur lesdites première et seconde bandes de fréquences.

L'invention consiste donc à séparer le signal d'entrée pour traiter séparément un première et une seconde bandes de fréquence. Le traitement envisagé est une atténuation du signal. Egaliser le signal en l'atténuant permet d'éviter les problèmes de saturation et de bruit, et aussi de réduire la consommation du dispositif d'égalisation. L'atténuation apportée par la première et/ ou la seconde branche varie en fréquence Cette variation en fréquence est déterminée par la bande passante des dispositifs de séparation et de recombinaison.

L'invention s'applique au cas particulier dans lequel on fait évoluer un réseau de distribution VHF en un réseau de distribution très large bande. Les réseaux de distribution VHF utilisent des composants passifs susceptibles d'introduire des défauts sur les très hautes fréquences. Ces défauts sont des manquements en amplitude. Ils varient avec la fréquence. Lorsqu'on fait évoluer un réseau VHF en réseau très large bande, ces composants passifs doivent donc être remplacés, ce qui est coûteux. Ce remplacement peut être évité en utilisant un premier mode de réalisation d'un dispositif d'égalisation selon l'invention. Un dispositif d'égalisation selon l'invention délivre un signal de sortie d'amplitude constante. De façon avantageuse, le second atténuateur est un atténuateur réglable qui est contrôlable localement ou à distance. L'atténuation apportée par le second atténuateur est ainsi adaptable au cas par cas, en fonction du réseau de distribution, pour compenser exactement les défauts réellement introduits.

Brève description des figures

L'invention sera mieux comprise et d'autres détails apparaîtront dans la description qui va suivre en regard des dessins annexés qui sont donnés à titre d'exemples non limitatifs.

- la figure 1 représente un schéma d'un exemple de réseau de distribution selon l'invention,
- la figure 2 est un schéma d'un exemple de dispositif de traitement de signaux selon l'invention,
- la figure 3 est un schéma d'un exemple d'un mode de réalisation d'un dispositif d'égalisation selon l'invention,
- la figure 4 donne l'allure de la réponse en fréquence d'un dispositif d'égalisation pour différents réglages de l'atténuateur variable, pour le mode premier mode de réalisation,
- la figure 5 est un schéma d'un premier exemple de diplexeur avantageusement utilisé dans un dispositif d'égalisation selon l'invention,
- la figure 6 est un schéma d'un deuxième exemple de diplexeur avantageusement utilisé dans un dispositif d'égalisation selon l'invention,
- la figure 7 est un schéma d'un troisième exemple de diplexeur avantageusement utilisé dans un dispositif d'égalisation selon l'invention.

Description d'un mode de réalisation

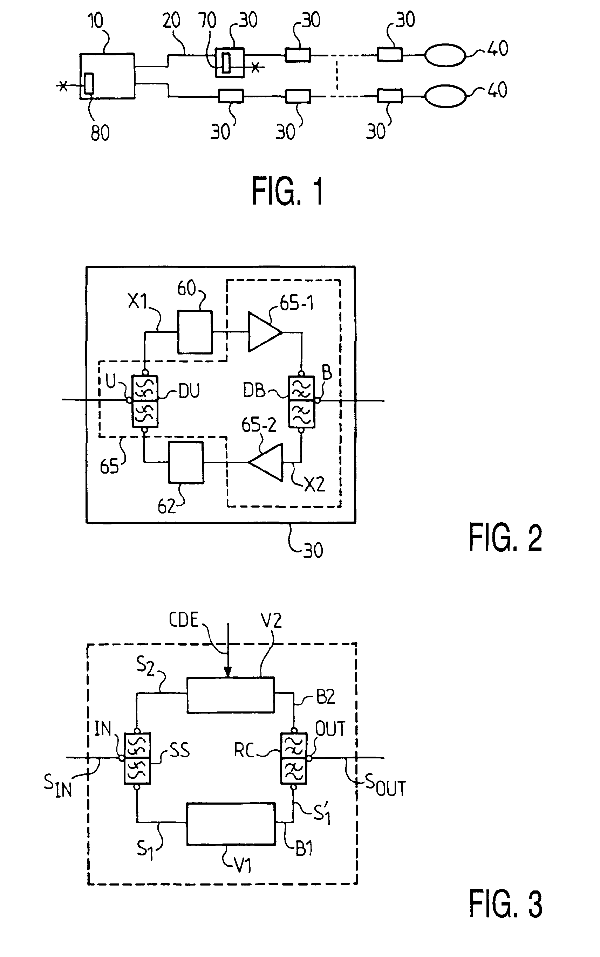

Sur la figure 1, on a représenté un exemple de réseau 1 de distribution selon l'invention. Le réseau 1 comporte une station de tête 10, des câbles 20, des dispositifs de traitement de signaux 30 insérés dans les câbles à des distances plus ou moins régulières, et des terminaux utilisateurs 40. Les câbles 20 servent à transmettre des signaux de la tête de réseau 10 vers les utilisateurs 40 selon une voie descendante, et à remonter les signaux émis par les utilisateurs 40 vers la tête de réseau 10 selon une voie montante. Les dispositifs de traitement de signaux 30 ont pour fonction de traiter les signaux transmis sur le câble au bout d'une certaine distance de câble. Dans le cadre de l'invention, ce traitement comporte une égalisation et une amplification des signaux transmis sur les voies montante et descendante.

De façon avantageuse, les dispositifs de signaux 30 et la tête de réseau 10 comportent des moyens d'émission / réception 70 et 80 respectivement. Ces moyens permettent à la tête de réseau de contrôler à distance les dispositifs de traitement de signaux 30.

Sur la figure 2 on a représenté un premier exemple de dispositif de traitement de signaux selon l'invention.

Dans ce premier exemple, le dispositif de traitement de signaux 30 comporte:

- un dispositif d'égalisation 60 selon l'invention qui a pour fonction de compenser les défauts introduits sur la voie descendante par le réseau de distribution, quelque soient ces défauts,
- un dispositif d'égalisation classique 62 pour égaliser les signaux transmis sur la voie montante,
- et un dispositif d'amplification 65 pour amplifier les signaux transmis sur les voies montante et descendante, qui est par exemple du type décrit dans le brevet européen précité.

Ainsi, d'après la figure 2, le dispositif de traitement de signaux 30 comporte deux entrées / sorties U et B auxquelles sont connectés deux dispositifs de séparation de signaux DU et DB, également appelés diplexeurs, et qui ont respectivement pour fonction de séparer les voies descendante et montante X1 et X2. Les signaux de la voie descendante X1 sont transmis de l'entrée U vers la sortie B par l'intermédiaire du dispositif d'égalisation 60 et d'un amplificateur 65-1. Les signaux de la voie montante X2 sont transmis de l'entrée B vers la sortie U par l'intermédiaire du dispositif d'égalisation 62 et d'un amplificateur 65-2. L'ordre dans lequel sont connectés les amplificateurs et les dispositifs d'égalisation est indifférent.

La transmission sur la voie montante étant moins critique que la transmission sur la voie descendante, il est en général suffisant d'utiliser un dispositif d'égalisation classique sur la voie montante. Mais il est bien sûr possible d'utiliser aussi un dispositif d'égalisation selon l'invention sur la voie montante.

Sur la figure 3, on a représenté un exemple d'un mode de réalisation d'un dispositif d'égalisation selon l'invention, applicable pour faire évoluer un réseau VHF en réseau très large bande. Dans ce premier mode de réalisation, le dispositif d'égalisation comporte une première et une seconde branches B1 et B2 réunies au niveau d'une entrée IN et d'une sortie OUT du dispositif d'égalisation.

Au niveau de l'entrée IN, les deux branches B1 et B2 sont réunies par un dispositif de séparation de signal SS (également appelé diplexeur) destiné à séparer en fréquence un signal d'entrée $s_{IN}$ pour délivrer sur la première branche B1 un signal $s_1$ occupant une première bande de fréquence, et sur la seconde branche B2 un signal $s_2$ occupant une seconde bande de fréquence. Dans ce premier mode de réalisation, la première bande de fréquences est constituée par la bande VHF comprise entre 40MHz et 500MHz, et la seconde bande est constituée par la bande UHF comprise entre 500MHz et 860MHz.

Au niveau de la sortie OUT, les deux branches B1 et B2 sont réunies par un dispositif de recombinaison RC (également appelé diplexeur) destiné à délivrer un signal de sortie $s_{OUT}$ occupant les première et seconde bandes de fréquences, à partir des signaux $s'_1$ et $s_2$ fournis par les première et seconde branches respectivement.

La branche B1 est munie d'un premier atténuateur V1 et la branche B2 d'un second atténuateur V2. L'atténuation apportée par le premier atténuateur V1 est supérieure à celle apportée par le second atténuateur V2.

L'atténuation apportée par la branche B2 doit avoir une allure inverse du défaut que l'on cherche à corriger. Puisque le défaut introduit par le réseau de distribution sur la partie haute de la bande 40MHz-860MHz augmente avec la fréquence considérée, l'atténuation apportée par la branche B2 doit diminuer lorsque la fréquence augmente. Cette variation en fréquence de l'atténuation est déterminée par la bande passante des diplexeurs SS et RC. Finalement, le signal de sortie $s_{OUT}$ est d'amplitude sensiblement constante sur la bande 40MHz-860MHz.

De façon avantageuse le second atténuateur V2 est réglable. Cela permet de modifier les paramètres de l'atténuateur V2 en fonction du réseau de distribution de façon à compenser exactement les défauts réellement introduits. L'atténuateur réglable est contrôlable localement ou à distance.

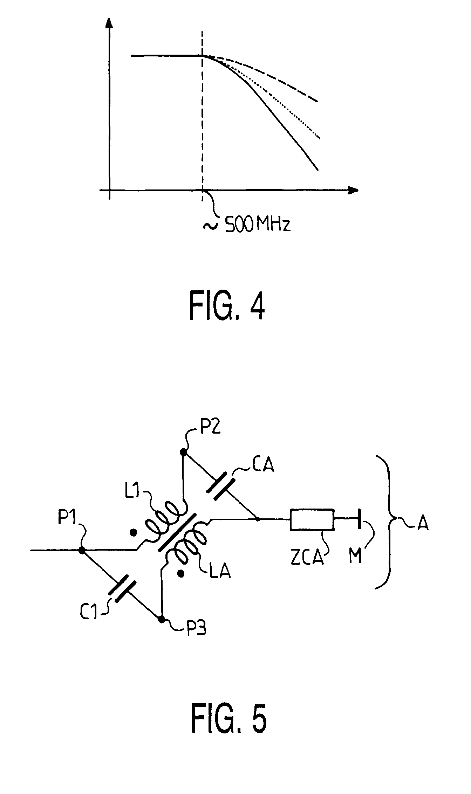

Sur la figure 4 on a représenté l'allure de la réponse en fréquence du dispositif d'égalisation de la figure 3 lorsque le signal d'entrée $s_{IN}$ a une amplitude constante, pour différents réglages du second atténuateur V2 (l'axe des abscisses indique la fréquence, l'axe des ordonnées indique l'amplitude).

De façon avantageuse, les dispositifs de séparation SS et de recombinaison RC sont identiques et sont du type décrit dans le brevet européen n°0529734B1.

Ils comportent :

- un port P1 relié à l'entrée IN du dispositif d'égalisation, un port P2 relié à la première branche B1, et un port P3 reliée à la deuxième branche B2,
- un élément de filtrage principal de type passe-bas L1 connecté entre les premier et deuxième ports P1 et P2,
- un élément de filtrage principal de type passe-haut C1 connecté entre les premier et troisième ports P1 et P3,
- et un circuit d'adaptation et d'annulation de réaction A connecté entre les deuxième et troisième ports.

Les éléments de filtrage sont constitués par une simple capacité ou inductance, ou par des circuits de filtrage plus complexes.

Différents exemples de circuits d'adaptation et d'annulation de réaction A sont décrits en référence aux figures 5 à 7. Ces exemples ne sont pas limitatifs, et de nombreuses variantes sont envisageables.

D'après la figure 5, le circuit d'adaptation et d'annulation de réaction A comporte un élément de filtrage additionnel de type passe-bas LA connecté au troisième port P3 et monté en série avec un élément de filtrage additionnel de type passe-haut CA qui est connecté au deuxième port P2. Le point Q qui est commun aux dits éléments de filtrage additionnels est relié à la masse M par l'intermédiaire d'une charge adaptée ZCA, et un couplage magnétique est prévu entre les éléments de filtrage de type passe-bas principal L1 et additionnel LA. L'ensemble constitué par les éléments de filtrage principaux et additionnels est équilibré, c'est-à-dire que les valeurs des deux éléments de filtrage passe-bas sont sensiblement identiques, de même que celle des deux éléments de filtrage passe-haut.

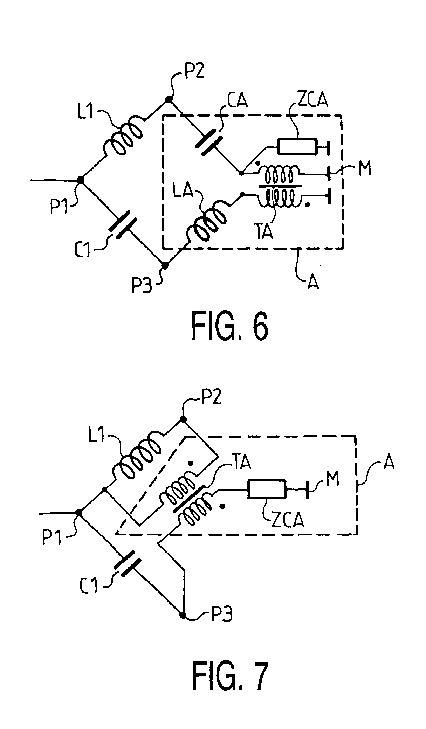

D'après la figure 6, le circuit d'adaptation et d'annulation de réaction A comporte un élément de filtrage additionnel de type passe-bas LA, un élément de filtrage additionnel de type passe-haut CA, une charge adaptée ZCA, et un transformateur TA qui possède un premier et un deuxième enroulements dotés chacun de deux extrémités. L'élément de filtrage additionnel de type passe-bas LA est monté entre le troisième port P3 et une extrémité du premier enroulement. L'élément de filtrage additionnel de type passe-haut CA est monté entre le deuxième port P2 et une extrémité du deuxième enroulement. Les deux autres extrémités des enroulements sont connectées à la masse M. La charge adaptée ZCA est montée en parallèle avec l'un quelconque des deux enroulements. Enfin, l'ensemble constitué par les éléments de filtrage principaux et additionnels est équilibré.

D'après la figure 7, le circuit d'adaptation et d'annulation de réaction A comporte un transformateur TA qui possède un premier enroulement, connecté en parallèle avec l'élément de filtrage principal de type passe-bas L1, et un second enroulement connecté d'une part à la masse via une charge adaptée ZCA et d'autre part au troisième port P3.

A titre d'exemple on utilise les valeurs suivantes :

- ZCA= Ro=75 Ohms, Ro étant l'impédance caractéristique de travail,

-

$$L1 = LA = \frac{Ro\sqrt{2}}{\omega},$$

avec $\omega = 2\pi.f$, f étant la fréquence de coupure des éléments de filtrage du diplexeur

-

$$C1=CA=\frac{\sqrt{2}}{2.Ro.\omega}$$

Les atténuateurs qui sont insérés sur les première et seconde branches doivent être parfaitement adaptés. De façon classique un atténuateur est par exemple constitué de trois résistances connectées en T ou en π. Lorsque l'atténuateur est réglable, on utilise par exemple des résistances variables constituées par des diodes PIN. Une alternative consiste à utiliser un réseau de résistances fixes reliées à des interrupteurs.

Le réglage de l'atténuateur est modifié en appliquant une commande CDE à l'atténuateur réglable. Cette commande est par exemple transmise par la tête de réseau 10. Dans un autre exemple, elle est fournie localement, éventuellement en utilisant une télécommande.

L'invention n'est pas limitée au mode de réalisation qui vient d'être décrit à titre d'exemple. Pour d'autres applications on peut envisager de découper la bande de fréquence utile de façon différente pour obtenir une première et une seconde bandes de fréquences, et on peut appliquer des atténuations qui ont une allure différente de celle qui vient d'être décrite.

**Revendications**

1. Dispositif d'égalisation (62) comportant une première et une seconde branches (B1, B2) réunies :

- en entrée (IN) par un dispositif de séparation de signal (SS) destiné à séparer en fréquence un signal d'entrée ($s_{IN}$) pour délivrer un signal ($s_1$) occupant une première bande de fréquence sur la première branche, et un signal ($s_2$) occupant une seconde bande de fréquence sur la seconde branche,
- et en sortie (OUT) par un dispositif de recombinaison (RC) destiné à délivrer un signal de sortie ($s_{OUT}$) occupant les première et seconde bandes de fréquences à partir des signaux transmis sur les première et seconde branches ($s'_1$, $s_2$), **caractérisé en ce que** :

la première et la deuxième bandes de fréquences correspondent à un découpage d'une bande de fréquence utile entre une partie basse (VHF) et une partie haute (UHF), les première et seconde branches (B1 et B2) étant chacune munie d'au moins un atténuateur (V1, V2), l'atténuation apportée par le premier atténuateur (V1) étant supérieure à celle apportée par le second atténuateur (V2), et les dispositifs de séparation et de recombinaison ayant une bande passante déterminée de façon à ce que le signal de sortie ($s_{OUT}$) soit d'amplitude sensiblement constante sur lesdites première et seconde bandes de fréquences.

2. Dispositif d'égalisation selon la revendication 1, **caractérisé en ce que** ledit dispositif de séparation et ledit dispositif de recombinaison comportent un premier, deuxième et troisième ports (P1, P2, P3), un élément de filtrage principal de type passe-bas (L1) connecté entre lesdits premier et deuxième ports (P1 et P2), un élément de filtrage principal de type passe-haut (C1) connecté entre lesdits premier et troisième ports (P1 et P3), et un circuit d'adaptation et d'annulation de réaction (CA, LA, TA, ZCA) connecté entre les deuxième et troisième ports (P2 et P3).

3. Dispositif d'égalisation selon la revendication 1, **caractérisé en ce que** ledit atténuateur est un atténuateur réglable.

4. Dispositif d'égalisation selon la revendication 2 **caractérisé en ce que** le circuit d'adaptation et d'annulation de réaction comporte un élément de filtrage additionnel de type passe-bas (LA) connecté audit troisième port et monté en série avec un élément de filtrage additionnel de type passe-haut (CA) qui est connecté audit deuxième port, le point commun aux dits éléments de filtrage additionnels étant relié à une masse par l'intermédiaire d'une charge adaptée (ZCA), et un couplage magnétique étant prévu entre les éléments de filtrage de type passe-bas principal (L1) et additionnel (LA), l'ensemble constitué par les éléments de filtrage principaux (L1, C1) et additionnels (LA, CA) étant équilibré.

5. Dispositif d'égalisation selon la revendication 2 **caractérisé en ce que** le circuit d'adaptation et d'annulation de réaction comporte un élément de filtrage additionnel de type passe-bas (LA), un élément de filtrage additionnel de type passe-haut (CA), une charge adaptée (ZCA), et un transformateur (TA) qui possède un premier et un deuxième enroulements dotés chacun de deux extrémités, ledit élément de filtrage additionnel de type passe-bas (LA) étant monté entre ledit troisième port (P3) et une extrémité dudit premier enroulement, ledit élément de filtrage additionnel de type passe-haut (CA) étant monté entre ledit deuxième port et une extrémité dudit deuxième enroulement, les deux autres extrémités desdits enroulements étant connectées à une masse, ladite charge adaptée étant montée en parallèle avec l'un quelconque desdits enroulements, et l'ensemble constitué par les éléments de filtrage principaux (L1, C1) et additionnels (LA, CA) étant équilibré.

6. Dispositif d'égalisation selon la revendication 2, **caractérisé en ce que** le circuit d'adaptation et d'annulation de réaction comporte un transformateur (TA) qui possède un premier enroulement connecté en parallèle avec ledit élément de filtrage principal de type passe-bas (L1) et un second enroulement connecté d'une part à une masse via une charge adaptée (ZCA), et d'autre part audit troisième port (P3).

7. Dispositif de traitement de signaux destiné à être inséré dans un câble d'un réseau de distribution de signaux, ledit dispositif comportant un dispositif d'égalisation selon la revendication 1.

8. Dispositif de traitement de signaux selon la revendication 7, **caractérisé en ce qu'**il comporte au moins une première et une seconde entrées/sorties (U, B) auxquelles sont connectés deux dispositifs de séparation/recombinaison (DU, DB) qui ont respectivement pour fonction de séparer et de recombiner des signaux transmis sur une voie descendante (X1) et sur une voie montante (X2), les signaux de la voie descendante (X1) étant transmis de la première entrée/sortie (U) vers la seconde entrée/sortie (B) par l'intermédiaire dudit dispositif d'égalisation (60) et d'un premier amplificateur (65-1), et les signaux de la voie montante (X2) étant transmis de la seconde entrée/sortie (B) vers la première entrée/sortie (U) par l'intermédiaire d'un autre dispositif d'égalisation (62) et d'un second amplificateur (65-2).

9. Dispositif de traitement de signaux selon la revendication 7, **caractérisé en ce qu'**il comporte des moyens d'émission / réception pour communiquer avec un dispositif distant (10), notamment pour contrôler ledit atténuateur (V2, V3) lorsque celui-ci est réglable.

**10.** Réseau câblé de distribution de signaux, comportant une tête de réseau (10) et au moins un câble (20) le long duquel est inséré au moins un dispositif de traitement de signaux (30) selon la revendication 7.

FIG. 1

FIG. 2

FIG. 3

FIG. 4

FIG. 5

FIG. 6

FIG. 7

**Office européen des brevets**

# RAPPORT DE RECHERCHE EUROPEENNE

Numéro de la demande

EP 01 20 4428

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int.Cl.7) |
|---|---|---|---|
| D,X<br>Y | US 4 250 459 A (HAASS ADOLF)<br>10 février 1981 (1981-02-10)<br>* abrégé *<br>* colonne 1, ligne 6 - ligne 25 *<br>* colonne 1, ligne 46 - ligne 56 *<br>* colonne 4, ligne 4 - ligne 37 *<br>* colonne 5, ligne 41 - ligne 58 *<br>* colonne 6, ligne 40 - ligne 55 *<br>* figures 1,4,8 * | 1,3,7,9,10<br><br>2,4-6,8 | H04B3/14<br>H04L25/02<br>H04L25/03 |
| X<br><br>A | US 5 841 810 A (WONG HEE ET AL)<br>24 novembre 1998 (1998-11-24)<br>* colonne 1, ligne 5 - ligne 33 *<br>* colonne 3, ligne 50 - ligne 67 *<br>* figure 2 * | 1,3,7,9,10<br><br>2,4-6,8 | |
| D,Y<br><br>A | US 5 343 158 A (GRIS JOEL ET AL)<br>30 août 1994 (1994-08-30)<br>* abrégé *<br>* colonne 1, ligne 57 - colonne 2, ligne 17 *<br>* colonne 2, ligne 61 - colonne 4, ligne 41 *<br>* colonne 5, ligne 3 - ligne 30 *<br>* figures 1,4,5 * | 2,4-6,8<br><br>1,7 | |
| A | US 5 774 458 A (WILLIAMSON LOUIS D)<br>30 juin 1998 (1998-06-30)<br>* abrégé *<br>* colonne 4, ligne 39 - colonne 5, ligne 31 *<br>* figures 4-6 * | 1,7,8 | DOMAINES TECHNIQUES RECHERCHES (Int.Cl.7)<br><br>H04B<br>H04L |

Le présent rapport a été établi pour toutes les revendications

| Lieu de la recherche | Date d'achèvement de la recherche | Examinateur |
|---|---|---|
| LA HAYE | 17 janvier 2002 | Marselli, M |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

EP 1 209 819 A1

**ANNEXE AU RAPPORT DE RECHERCHE EUROPEENNE**
**RELATIF A LA DEMANDE DE BREVET EUROPEEN NO.**

EP 01 20 4428

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

17-01-2002

| Document brevet cité au rapport de recherche | | Date de publication | Membre(s) de la famille de brevet(s) | | Date de publication |
|---|---|---|---|---|---|
| US 4250459 | A | 10-02-1981 | DE | 2810504 A1 | 13-09-1979 |
| | | | AT | 372809 B | 25-11-1983 |
| | | | AT | 173779 A | 15-03-1983 |
| | | | BR | 7901429 A | 09-10-1979 |
| | | | CA | 1137180 A1 | 07-12-1982 |
| | | | DE | 2960471 D1 | 22-10-1981 |
| | | | DK | 98279 A ,B | 11-09-1979 |
| | | | EP | 0004054 A1 | 19-09-1979 |
| | | | MX | 146561 A | 07-07-1982 |
| | | | NO | 790787 A ,B, | 11-09-1979 |
| US 5841810 | A | 24-11-1998 | DE | 19732050 A1 | 06-08-1998 |
| | | | KR | 264068 B1 | 16-08-2000 |
| US 5343158 | A | 30-08-1994 | FR | 2680934 A1 | 05-03-1993 |
| | | | AT | 147219 T | 15-01-1997 |
| | | | DE | 69216324 D1 | 13-02-1997 |
| | | | DE | 69216324 T2 | 19-06-1997 |
| | | | EP | 0529734 A1 | 03-03-1993 |
| | | | JP | 5227061 A | 03-09-1993 |
| US 5774458 | A | 30-06-1998 | AUCUN | | |

EPO FORM P0460